# EUROPÄISCHE PATENTANMELDUNG

(11) **EP 3 654 003 A1**
(43) Veröffentlichungstag der Anmeldung: **20.05.2020**
(21) Anmeldenummer: 18206116.8
(22) Anmeldetag: 14.11.2018
(51) Int. Cl.: G01K 1/16, G01K 11/32

(54) **MEHRPUNKT-TEMPERATURMESSSYSTEM**

(71) Anmelder: Siemens Aktiengesellschaft, 80333 München (DE)
(72) Erfinder: Baader, Sabrina, 76185 Karlsruhe (DE); Ens, Wolfgang, 76351 Linkenheim (DE); von Dosky, Stefan, 76149 Karlsruhe (DE)

(57) **Zusammenfassung**

Bei einem Mehrpunkt-Temperaturmesssystem mit einer optischen Faser (2), entlang der räumlich verteilte Messpunkte (3) ausgebildet sind und die in einer Stahlkapillare (10) angeordnet ist, ist die Stahlkapillare (10) in einem Rohr (11) angeordnet, dass zumindest abschnittsweise aus einem hoch wärmeleitenden Metall besteht.

Das Mehrpunkt-Temperaturmesssystem kann zur Erkennung von Hot-Spots (14) verwendet werden.

## Beschreibung

Die Erfindung betrifft ein Mehrpunkt-Temperaturmesssystem mit einer optischen Faser, entlang der räumlich verteilte Messpunkte ausgebildet sind und die in einer Stahlkapillare angeordnet ist.

Die Erfindung betrifft ferner eine Verwendung eines solchen Mehrpunkt-Temperaturmesssystems.

In der Industrie ermöglicht eine lückenlose und schnelle Ermittlung von Temperaturprofilen dem Anlagenbetreiber eine Prozessoptimierung in Hinblick auf Standzeit, Qualität und Ausbeute. Lokale Überhitzungen können schnell und positionsgenau erkannt werden, um im Weiteren Schäden für den Prozess, die Anlage und die Umgebung zu vermeiden.

Aus S. von Dosky et al.: "Optical Fiber Temperature Measurement for Process Industry", AMA Conferences 2013, Band Proceedings SENSOR 2013, Kapitel D6 - Temperatur Sensors, Seiten 578-582, ist es bekannt, Temperaturstufungen oder auch die Entstehung von schädlichen Hot-Spots mit Hilfe von Mehrpunkt-Temperaturmesssystemen zu erfassen, wobei die Möglichkeit einer robusten Temperaturmessung mit vielen Sensoren am ehesten von der Faser-Bragg-Gittermesstechnik (FBG) erfüllt wird.

So dient das Mehrpunkt-Temperaturmesssystem SITRANS TO500 der Siemens AG zur Auswertung einer hohen Anzahl von Temperaturmesssensoren, die entlang einer sehr schlanken faseroptischen Temperaturmesslanze angeordnet sind. Das System besteht aus einem ein- oder mehrkanaligen Messgerät (Interrogator), an dem eine oder mehrere Messlanzen mit jeweils einer Vielzahl von Messpunkten (Messstellen) angeschlossen werden können. Jede Messlanze enthält eine optische Faser in einem langen (mehrere Meter) und dünnen (Durchmesser < 2 mm) Edelstahl-Kapillarrohr. An den Messpunkten sind Fiber-Bragg-Gitter (FBGs) in die optische Faser eingeschrieben, die von dem Transmitter erzeugtes und in die Faser eingekoppeltes Licht in einer von der Temperatur an dem jeweiligen Messpunkt abhängigen Wellenlänge zurückreflektieren. Die Lichtreflexionen an den FBGs sind damit ein Maß für die Temperatur an den jeweiligen Messpunkten. Das Messgerät wertet das reflektierte Licht bezüglich Messstelle und Temperatur aus und kann die ermittelten Werte über eine Feldbus-Schnittstelle für die weitere Auswertung, beispielsweise einem Leitsystem, zum Zwecke des Assetmanagements und für die Optimierung des Prozesses bereitstellen.

FBG-Sensoren haben technologisch bedingt eine geometrische Länge zwischen ca. 1 mm und 15 mm. Dies ist der Bereich der Faser in dem mittels eines Lasers eine periodische Modulation der Brechzahl (Brechindex) eingeschrieben wird. Je länger der FBG-Sensor ist, umso schmalbandiger ist der Reflexionspeak. Bei einer Länge > 15 mm wird aber bedingt durch das Ziehen der Faser die Abbildung zunehmend unscharf, weil die periodische Brechzahlmodulation nicht äquidistant ist.

Aus der DE 10 2004 031 324 A1 ist ein Verfahren zur Temperaturmessung in apparativen Einrichtungen und Produktionsanlagen der chemisch-pharmazeutischen Industrie bekannt, bei dem mindestens eine FBG-Faser in eine solche Einrichtung eingebracht wird und durch Auswertung der Reflexionen an den Bragg-Gittern ein Temperaturprofil der Einrichtung ermittelt wird. Als Beispiel wird ein Kapillarreaktor mit einer Länge von 1 m angegeben, in den eine Faser mit acht Messpunkten eingeführt wird, deren Abstände in Richtung von dem Transmitter weg in geometrischer Folge mit dem Quotienten 1/2 abnehmen.

Bei bestimmten Messaufgaben, wie z. B. der Erkennung von lokalen Überhitzungen (Hot-Spots) oder der Temperaturmessung in sehr großen Volumina, ist oft nicht die Präzision jedes einzelnen Messwertes gefragt, sondern die Überwachung eines Profils von Messwerten über der Zeit. Werden solche Messaufgaben mit FBG-Sensoren angegangen, können sich bei größeren Objekten als der in der DE 10 2004 031 324 A1 beispielhaft angegebene Kapillarreaktor aufgrund der relativ kurzen aktiven Sensorzonen entlang der Messlanze lange Faserabschnitte ergeben, in denen nicht gemessen wird. Die Anzahl und damit die Dichte der Messpunkte kann jedoch nicht beliebig vergrößert werden.

Gemäß der Erfindung wird das Problem durch das in Anspruch 1 angegebene Mehrpunkt-Temperaturmesssystem gelöst, von dem vorteilhafte Weiterbildungen den Unteransprüchen zu entnehmen sind.

Gegenstand der Erfindung ist somit ein Mehrpunkt-Temperaturmesssystem mit einer optischen Faser, entlang der räumlich verteilte Messpunkte ausgebildet sind und die in einer Stahlkapillare angeordnet ist, wobei Stahlkapillare in einem Rohr angeordnet ist, das zumindest abschnittsweise aus einem hoch wärmeleitenden Metall besteht.

Durch das gut wärmeleitende Rohr wird Wärme aus Bereichen der optischen Faser ohne Messpunkte bzw. zwischen den Messpunkten in Bereiche mit Messpunkten geleitet. Auf diese Weise kann die effektive sensitive Länge der Messpunkte, z. B. Bragg-Gitter, vergrößert und an die jeweilige Messaufgabe angepasst werden.

Als hoch wärmeleitendes Metall können insbesondere Kupfer oder Aluminium vorgesehen werden. Zur Erhöhung der Wärmeleitung kann das Rohr dickwandig gewählt werden.

Je nach Messanforderung kann das Rohr durchgehend aus dem hoch wärmeleitenden Metall bestehen oder entlang der optischen Faser in thermisch voneinander isolierte Abschnitte mit hoher Wärmeleitfähigkeit unterteilt sein, um ein Übersprechen der Temperatur in benachbarte Abschnitte der optischen Faser zu vermeiden. Im einfachsten Fall sind die hoch wärmeleitenden Abschnitte durch Lücken voneinander räumlich getrennt. Anstelle der Lücken können auch Rohr-Segmente aus einem schlecht wärmeleitenden Material vorgesehen sein, bzw. die Lücken damit gefüllt sein. Die hoch wärmeleitenden Abschnitte können auch durch Materialschwächung, z. B. Wandverdünnung, des Rohres voneinander thermisch getrennt werden.

Das erfindungsgemäße Mehrpunkt-Temperaturmesssystem kann in vorteilhafter Weise zur Detektion von lokalen Überhitzungen (Hot-Spots) oder Unterkühlungen (Cold-Spots) verwendet werden. Dabei können durch Interpolation von Messwerten mehrerer Messpunkte (Bragg-Gitter) entlang der optischen Faser Lage und Temperatur der Hot-Spots oder Cold-Spots ermittelt werden. Dabei kann die Berechnung durch eine äquidistante Anordnung der Messpunkte (Bragg-Gitter) entlang der optischen Faser erleichtert werden.

Um die Erkennung und Lokalisierung von Hot-Spots in der Fläche, z. B. in Bereichen zwischen verschiedenen optischen Fasern oder zwischen Windungen der Faser, zu verbessern kann das Rohr bzw. können die Rohrabschnitte, vorzugsweise in den Bereichen der Messpunkte, armförmige Fortsätze aus hoch wärmeleitendem Metall aufweisen.

Im Weiteren wird die Erfindung anhand von Ausführungsbeispielen und unter Bezugnahme auf die Figuren der Zeichnung erläutert; im Einzelnen zeigen
- Fig. 1: ein Ausführungsbeispiel des erfindungsgemäßen Mehrpunkt-Temperaturmesssystems,
- Fig. 2: ein Beispiel für die Erkennung eines Hot-Spots mittels Mehrpunkt-Temperaturmessung Verwendung eines Rohres aus hoch wärmeleitendem Metall,
- Fig. 3: ein Beispiel zur Verdeutlichung der Erkennung von Lage und Temperatur eines Hot-Spots,
- Fig. 4: ein weiteres Beispiel für die Hot-Spot-Erkennung, bei dem das Rohr in voneinander isolierte Abschnitte unterteilt ist und
- Fig. 5: ein weiteres Beispiel für die Hot-Spot-Erkennung mit armförmigen Fortsätzen aus hoch wärmeleitendem Metall, die von dem Rohr abgehen.

Gleiche Bezugszeichen haben in den verschiedenen Figuren die gleiche Bedeutung. Die Darstellungen sind rein schematisch und repräsentieren keine Größenverhältnisse.

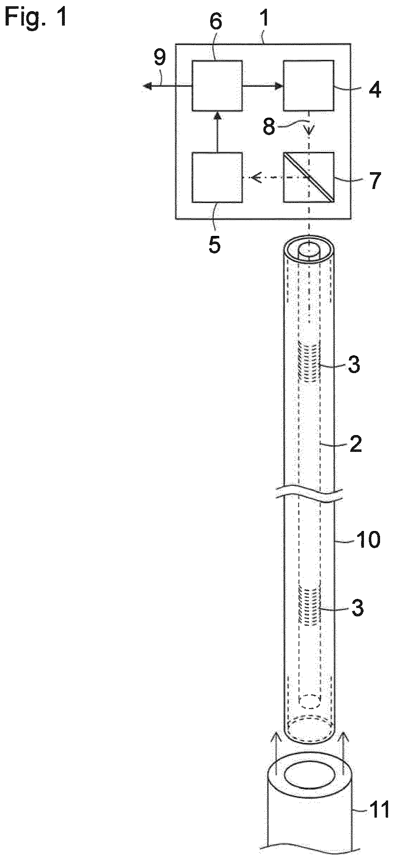

Fig. 1 zeigt ein Mehrpunkt-Temperaturmesssystem mit einem Messgerät (Interrogator) 1 und einer optischen Faser 2, entlang der eine Vielzahl von Messpunkten 3, hier in Form von Fiber-Bragg-Gittern (FBGs), ausgebildet sind. Das Messgerät 1 enthält einen Transmitter (Lichtquelle) 4 und einem Receiver (Detektor) 5, die baulich und/oder funktionell einen Transceiver bilden, an dem eine Steuer- und Auswerteeinrichtung 6 angeschlossen ist. Ein optischer Koppler oder Strahlteiler 7 koppelt von dem Transmitter 4 erzeugtes Licht 8 in die optische Faser 2 ein und aus dieser von den Bragg-Gitterstellen 3 zurückreflektiertes Licht zu dem Receiver 5 aus. Die Bragg-Gitter 3 reflektieren das Licht mit einer spektralen Intensitätsverteilung zurück, die von der jeweiligen individuellen Gitterstruktur und der lokalen Temperatur abhängig ist, so dass die Auswerteeinrichtung 6 die Temperaturen an den unterschiedlichen Gitterstellen 3 ermitteln kann. Die Messergebnisse können über einen Ausgang 9 beispielsweise an eine hier nicht gezeigte übergeordnete Prozesssteuerung ausgegeben oder über ein Display visualisiert werden.

Die optische Faser 2 ist in ein Schutzrohr in Form einer sehr dünnen biegsamen Edelstahl-Kapillare 10 eingezogen. Aufgrund der vergleichsweise geringen Wärmeleitfähigkeit von Stahl kommt es zu keinem Übersprechen der an einer Messstelle vorliegenden und dort zu messenden Temperatur in benachbarte Bereiche der optischen Faser 2. Andererseits wird aufgrund der Dünnwandigkeit der Edelstahl-Kapillare 10 die zu messende Temperatur praktisch ungedämpft und verzögerungsfrei an das Bragg-Gitter 3 an der betreffenden Messstelle übertragen. Wie in Fig. 1 gezeigt und anhand der folgenden Figuren näher erläutert wird, ist die Edelstahl-Kapillare 10 mit der optischen Faser 2 in ein Rohr 11 eingeschoben, das zumindest abschnittsweise aus einem im Vergleich zu dem Stahl der Kapillare 10 hoch wärmeleitenden Metall wie z. B. Kupfer oder Aluminium besteht. Das Rohr 11 ist ferner deutlich dickwandiger als die Kapillare 10. Der Innendurchmesser des Rohres 11 ist so gewählt, dass die Edelstahl-Kapillare 10 in Wärmekontakt mit diesem steht. Der Kontakt kann durch eine Wärmeleitpaste verbessert werden. Das Rohr 11 kann auch als Metallschlauch beispielsweise aus Litzenmaterial, als Wickelschauch oder aus Wickeldraht ausgebildet sein.

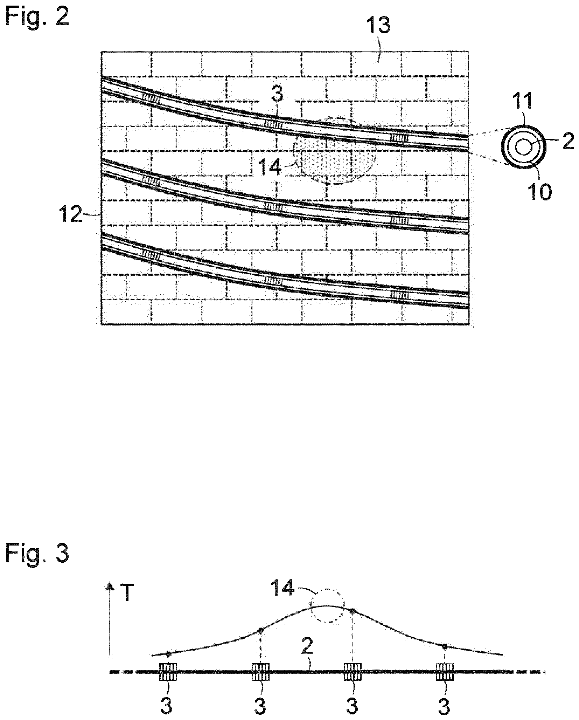

Fig. 2 zeigt einen Ausschnitt einer Ummauerung 12 eines Industrieofens mit Schamottsteinen 13. Ein defekter Stein führt zu einer lokalen Überhitzung (Hot-Spot) 14 der Ummauerung 12. Zur Erkennung solcher Hot-Spots 14 ist das gut wärmeleitende Rohr 11 mit der darin liegenden Edelstahl-Kapillare 10 und optischen Faser 2 in engem Kontakt mit der Ummauerung 12 in Windungen um diese herum gelegt. Alternativ kann das Rohr 11 z. B. mäanderförmig über die Wandfläche der Ummauerung 12 geführt sein. Wenn das in Fig. 1 gezeigte Messgerät 1 mehrkanalig ist, können mehrere solcher wärmeleitender Rohre mit Stahl-Kapillare und optischer Faser z. B. an unterschiedlichen Wandbereichen der Ummauerung 12 verwendet werden. Durch das gut wärmeleitende Rohr 11 die von dem Hot-Spot 14 ausgehende Wärme entlang des Rohres 11 und damit entlang der optischen Faser 2 verteilt, wobei die Temperatur mit zunehmender Entfernung von dem Hot-Spot 14 abfällt. Dieser Temperaturgradient bleibt besehen, weil der Hot-Spot 14 eine stetige Wärmequelle darstellt und die Schamottsteine 13 selbst sehr schlechte Wärmeleiter sind. Bei dem gezeigten Beispiel erfassen die beiden beiderseits des Hot-Spots 14 liegenden Bragg-Gitter 3 der oberen Windung des Rohres 11 eine erhöhte Temperatur, wobei das Messgerät 1 den Hot-Spot 14 zwischen diesen beiden Bragg-Gittern liegend lokalisiert.

Wie Fig. 3 verdeutlicht, kann die Auswerteeinrichtung 6 anhand des Temperaturverlaufs T, der durch die weiter von dem Hot-Spot beabstandeten Bagg-Gitter 3 entlang der optischen Faser 2 erfasst wird, die Lage und die Temperatur des Hot-Spots 14 genau bestimmen.

Zurück zu Fig. 2 ist offensichtlich, dass die beiden beiderseits des Hot-Spots 14 liegenden Bragg-Gitter 3 diesen ohne das wärmeleitenden Rohr 11 nicht oder nicht in jedem Fall erfassen würden, weil aufgrund der sehr schlecht wärmeleitenden Schamottsteine 13 die erhöhte Temperatur auf den unmittelbaren Bereich des Hot-Spots 14 begrenzt ist.

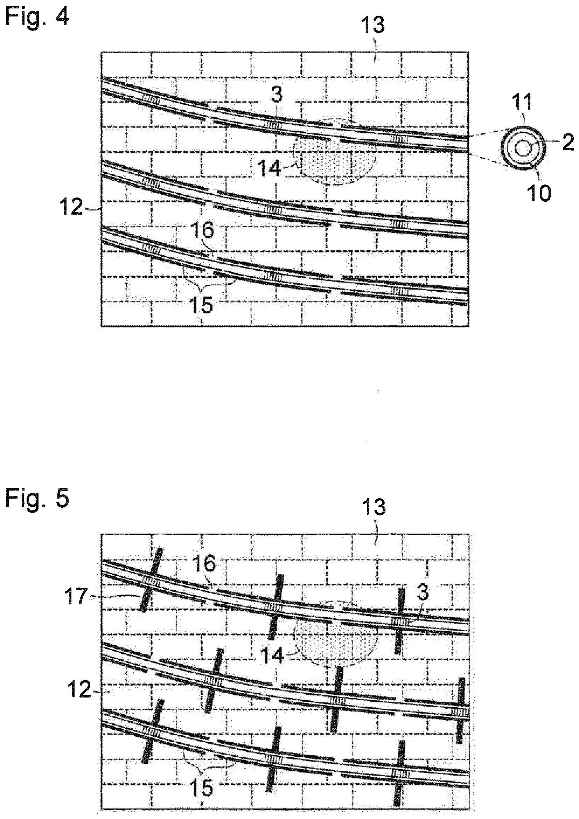

Das in Fig. 4 gezeigte Ausführungsbeispiel unterscheidet sich von dem nach Fig. 2 dadurch, dass das Rohr 11 nicht durchgehend aus dem hoch wärmeleitenden Material besteht, sondern in entlang der optischen Faser 2 in hoch wärmeleitende Abschnitte 15 unterteilt ist, zwischen denen kurze Segmente 16 mit niedriger Wärmeleitfähigkeit liegen. Im einfachsten, hier gezeigten Fall werden die Segmente 16 von Lücken zwischen den hoch wärmeleitenden Abschnitten 15 gebildet. Diese Lücken können ggf. mit einen schlecht wärmeleitenden Material ausgefüllt sein. Es ist auch möglich, die Wandstärke des Rohres 11 in den Bereichen der Segmente 16 zu verringern, um dort die Wärmeleitfähigkeit zu verringern. In jedem der hoch wärmeleitenden Abschnitte 15 befindet sich mindesten ein Bragg-Gitter 3. Die wärmeleitenden Abschnitte 15 bilden somit voneinander isolierte und damit thermisch übersprechungsfreie Messbereiche, innerhalb derer jeweils ein Hot-Spot 14 detektiert werden kann.

Bei dem in Fig. 5 gezeigten Ausführungsbeispiel weist das Rohr 11 bzw. weisen die Rohrabschnitte 15 in den Bereichen der Messpunkte 3 beidseitig armförmige Fortsätze 17 aus hoch wärmeleitendem Metall auf oder ist bzw. sind mit solchen Fortsätzen 17 verbunden, die in einer gemeinsamen Ebene mit dem Rohr 11 quer von diesen abgehen. Diese Fortsätze 17 können als Stäbe oder Bleche aus vorzugsweise demselben Material wie das Rohr 11 ausgebildet sein und verbessern die Überwachung auf Hot-Spots in der Fläche, hier zwischen den Windungen des Rohres 11.

Die oben beschriebene Hot-Spot-Erkennung stellt lediglich ein Beispiel dar und kann mit ggf. notwendigen Abänderungen an anderen industriellen Anlagenobjekten durchgeführt werden. Auf die gleiche Weise wie lokale Überhitzungen (Hot-Spots) können auch Unterkühlungen (Cold-Spots) ermittelt werden, z. B. der Ausfall einer von mehreren Heizungen oder Feuerungen.

## Patentansprüche

1. Mehrpunkt-Temperaturmesssystem mit einer optischen Faser (2), entlang der räumlich verteilte Messpunkte (3) ausgebildet sind und die in einer Stahlkapillare (10) angeordnet ist, **dadurch gekennzeichnet, dass** die Stahlkapillare (10) in einem Rohr (11) angeordnet ist, das zumindest abschnittsweise aus einem hoch wärmeleitenden Metall besteht.

2. Mehrpunkt-Temperaturmesssystem nach Anspruch 1, **dadurch gekennzeichnet, dass** das hoch wärmeleitende Metall Kupfer ist.

3. Mehrpunkt-Temperaturmesssystem nach Anspruch 1, **dadurch gekennzeichnet, dass** das hoch wärmeleitende Metall Aluminium ist.

4. Mehrpunkt-Temperaturmesssystem nach Anspruch 1, 2 oder 3, **dadurch gekennzeichnet, dass** das Rohr (11) durchgehend aus dem hoch wärmeleitenden Metall besteht.

5. Mehrpunkt-Temperaturmesssystem nach Anspruch 4, **dadurch gekennzeichnet, dass** das Rohr (11) in hoch wärmeleitende Abschnitte (15) unterteilt ist, zwischen denen Segmente (16) mit niedriger Wärmeleitfähigkeit liegen.

6. Mehrpunkt-Temperaturmesssystem nach Anspruch 5, **dadurch gekennzeichnet, dass** die Segmente (16) durch örtliche Materialschwächung, insbesondere durch Verringerung der Wandstärke des Rohres (11) gebildet sind.

7. Mehrpunkt-Temperaturmesssystem nach Anspruch 5, **dadurch gekennzeichnet, dass** die Segmente (16) aus Lücken zwischen den räumlich voneinander getrennten Rohrabschnitten (15) aus dem hoch wärmeleitenden Metall bestehen.

8. Mehrpunkt-Temperaturmesssystem nach Anspruch 5, **dadurch gekennzeichnet, dass** die Segmente (16) aus einem schlecht wärmeleitenden Material bestehen.

9. Mehrpunkt-Temperaturmesssystem nach einem der Ansprüche 5, bis 8, **dadurch gekennzeichnet, dass** in jedem Rohrabschnitt (15) mindestens einer der Messpunkte (3) liegt.

10. Mehrpunkt-Temperaturmesssystem nach einem der vorangehenden Ansprüche, **dadurch gekennzeichnet, dass** von dem Rohr (11), vorzugsweise in den Bereichen der Messpunkte (3), besonders vorzugsweise in den Rohrabschnitten (15), armförmige Fortsätze (17) aus hoch wärmeleitendem Metall ausgehen.

11. Mehrpunkt-Temperaturmesssystem nach einem der vorangehenden Ansprüche, **dadurch gekennzeichnet, dass** ein an der optischen Faser (2) angeschlossenes Messgerät (1) dazu ausgebildet ist, durch Interpolation von Messwerten mehrerer Messpunkte (3) entlang der optischen Faser (2) Lage und Temperatur einer lokale Überhitzung (Hot-Spot) oder Unterkühlung (Cold-Spot) zu ermitteln.

12. Verwendung des Mehrpunkt-Temperaturmesssystems nach einem der vorangehenden Ansprüche zur Erkennung von Lage und Temperatur von lokalen Überhitzungen (Hot-Spots) oder Unterkühlungen (Cold-Spots) zu ermitteln.
